Europäisches Patentamt

European Patent Office

Office européen des brevets

(11) Numéro de publication: **0 258 078**
**A1**

## (12) DEMANDE DE BREVET EUROPEEN

(21) Numéro de dépôt: **87401596.9**

(22) Date de dépôt: **07.07.87**

(51) Int. Cl.⁴: **G 01 F 25/00**

(30) Priorité: **08.07.86 FR 8609926**

(43) Date de publication de la demande:
**02.03.88 Bulletin 88/09**

(84) Etats contractants désignés: **BE DE ES GB**

(71) Demandeur: **Domengès**
**3, rue Beaudon Pierrefonds**
**F-60350 Cuise la Motte (FR)**

(72) Inventeur: **Domengès**
**3, rue Beaudon Pierrefonds**
**F-60350 Cuise la Motte (FR)**

(54) **Procédé et dispositif de vérification des compteurs de liquide.**

(57) On mesure la pression différentielle engendrée par l'écoulement dans un élement débitmétrique (5) dont un point de la caractéristique (débit, pression différentielle) est connu. On mesure simultanément le volume apparent, enregistré par le compteur à vérifier, et le temps d'écoulement correspondant.

Un micro-ordinateur, ayant en mémoire les relations de variation de la pression différentielle en fonction du débit, reçoit les signaux des capteurs (1), (6), et, utilisant son horloge interne (17), les traite pour déterminer la valeur du débit de réglage et celle de l'erreur du compteur (2) sur la mesure de volume.

L'utilisation complémentaire d'une jauge (15) permet de déterminer le point de référence de l'élément débitmétrique.

EP 0 258 078 A1

## Description

Procédé et dispositif de vérification des compteurs de liquide.

La présente invention concerne un procédé et un dispositif de vérification des compteurs de liquide.

Les compteurs de liquide les plus utilisés sont des compteurs de volume à piston rotatif ou des compteurs de vitesse à hélice ou turbine. Si tous ces appareils subissent,en vieillissant,une détérioration de leurs qualités métrologiques par usure mécanique,les seconds sont influencés par les modifications d'écoulement que provoquent les dépôts et incrustations de sels et impuretés véhiculés par le fluide. Une autre cause d'imprécision, quelquefois importante, dans le cas des compteurs à hélice axiale ou à turbine, est liée aux changements apportés à l'écoulement par les caractéristiques hydrauliques des canalisations ou appareils situés de part et d'autre du compteur, et principalement en amont de celui-ci. Ceci explique pourquoi les résultats d'éssais de compteurs montés sur un banc de laboratoire ne sont pas systématiquement représentatifs des conditions de comptage obtenues avec ces appareils installés dans leur site habituel de fonctionnement.

La présente invention a pour objet un procédé et un dispositif de contrôle, rapide, des compteurs installés.

Compte tenu de l'influence de l'environnement hyraulique, il s'agit d'un moyen de contrôle du compteur, tel qu'il est installé.

Le contrôle, ou la vérification, d'un compteur s'entend comme l'établissement de sa courbe d'erreur, e(Q), traduisant, pour chacun des débits compris dans l'étendue de mesure, débit noté Q, le rapport au volume réel de la différence entre le volume réel écoulé et le volume indiqué par le compteur, soit:

$$e = \frac{v - q}{q}$$

où $v$ = volume indiqué et $q$ = volume réel

Dans l'état actuel de la technique, les vérifications de compteurs en service sont réalisées:

. Soit, après dépose de l'appareil, sur un banc d'éssais agréé. Cette méthode entraine des risques de modification des caractéristiques du compteur, en particulier par variation de répartition des dépôts dans l'appareil. En outre, cette méthode ne tient pas compte des changements induits par l'environnement hydraulique du compteur en service.

. Soit sur le site de fonctionnement, à plusieurs débits, par comparaison entre le volume indiqué par le compteur essayé et le volume écoulé dans des jauges étalonnées. Cette méthode conduit à utiliser un matériel important et sa mise en oeuvre entraine des durées d'essais telles qu'il n'est pas possible d'envisager son utilisation courante.

. Soit, également sur le site de fonctionnement, à plusieurs débits, par comparaison entre les indications du compteur essayé et celles d'un comp teur "pilote" dont la courbe d'erreur est fréquemment vérifiée sur un banc d'essais de laboratoire. Cette vérification, longue et nécessitant la disponibilité d'un banc à proximité, n'est pas facilement généralisable.

La présente invention répond à l'objectif de donner un moyen commode, économique et faible de vérification des compteurs en service.

Le procédé suivant l'invention est caractérisé en ce que:

- Un tronçon de canalisation d'essais, dont on a vérifié préalablement la perte de charge $\Delta h_0$ pour un débit $Q_0$, est installé en série avec le compteur à vérifier; le dimensionnement du tronçon d'essais étant tel que, pendant les mesures, l'écoulement soit toujours d'un même type, par exemple: "turbulent lisse".

- Pour chacun des termes, Q, d'une série de débits répartis dans l'étendue de mesure du compteur:

. on mesure $\Delta h$, perte de charge dans le tronçon de canalisation d'essais;

. à partir des indications du compteur, on calcule le volume apparent, $v$, indiqué pendant le temps, $t$, mesuré;

. Q, débit réel de l'écoulement pendant le même temps t, est déterminé par:

- la relation:

$$\frac{Q}{Q_o} = \left(\frac{\Delta h}{\Delta h_o} \times \frac{\lambda_o}{\lambda}\right)^{1/2}$$

- et la relation de variation du coefficient de résistance, $\lambda$, en fonction du nombre de Reynolds, donc du débit; la formule de Blasius, par exemple, étant utilisable dans la plage de débits correspondant aux nombres de Reynolds compris entre 3000 et 50000;

. de la relation : $v = (1+e) q$ , on déduit le coefficient d'erreur: $(1+e)$, puis $e$; le volume réel, $q$, étant donné par: $q = Q t$;

. la série de couples de valeurs, $(Q, e)$, donne le tracé de la courbe d'erreur du compteur.

- Le tronçon de canalisation d'essais peut être remplacé par un organe déprimogène dont on mesure la différence de pression engendrée par le débit d'essai. La relation de variation du coefficient de débit du déprimogène, établie expérimentalement, se substitue alors à la relation de variation du coefficient de résistance du tronçon de canalisation.

- La précision des résultats obtenus par le procédé suivant l'invention est améliorée par l'utilisation de plusieurs éléments générateurs de pression différentielle, tronçons de canalisation ou organes déprimogènes. Ces éléments sont mis en circuit successivement par couple d'éléments disposés en série, pour permettre le raccordement des rapports de pression différentielle.

Par exemple, dans le cas de deux tronçons de canalisation d'essais,et dans une gamme de débits telle que les coefficients de résistance varient comme la puissance $\frac{-1}{4}$ du nombre de Reynolds, $\Delta h_1$ et $\Delta h_2$ étant mesurées sur le tronçon 1, aux débits $Q_1$ et $Q_2$, $\Delta h_2'$ et $\Delta h_0'$ étant mesurées sur le tronçon 2, aux débits $Q_2$ et $Q_0$, la relation:

$$\frac{Q_1}{Q_0} = \frac{Q_1}{Q_2} \times \frac{Q_2}{Q_0} \qquad \text{devient:} \qquad \frac{Q_1}{Q_0} = \left( \frac{\Delta h_1}{\Delta h_2} \times \frac{\Delta h_2'}{\Delta h_0'} \right)^{4/7}$$

En outre, l'utilisation de plusieurs éléments, générateurs de pression différentielle, est souvent imposée, compte tenu de l'étendue de mesure des compteurs, par la recherche d'uniformité du type d'écoulement pendant les mesures faites avec un élément.

La présente invention a également pour objet un dispositif de mise en oeuvre d'un tel procédé.

Le dispositif suivant l'invention est caractérisé en ce qu'il comprend:

- un capteur de mouvement du mobile, visible et le plus rapide, du compteur à vérifier; ce mobile étant,suivant les types de compteurs, un rouleau cranté ou gravé, une aiguille ou un index radial, une étoile, un disque à repères périphériques, ou encore une roue apparente du train de démultiplication, le capteur de mouvement est une cellule opto-électronique, montée sur un support qui s'adapte à la tête du compteur,fournissant un signal électrique lors du passage des discontinuités du mobile dans le faisceau optique; le volume apparent de liquide transitant par le compteur entre deux discontinuités consécutives est une caractéristique du compteur, son "pas de volume";

- un compteur électronique totalisant le nombre de signaux fournis par la cellule opto-électronique;

- au moins un élément débitmétrique, qui est le siège de pressions différentes quand il y a écoulement, dont la différence de pressions est fonction du débit, et qui peut être:

. soit un élément de canalisation, équipé de deux prises de pression qui permettent la mesure de la perte de charge,

. soit un organe déprimogène, tel que diaphragme ou tuyère ou venturi, équipé de ses deux prises de pression;

- un ou deux capteurs de pression différentielle, suivant qu'il y a un ou plusieurs éléments générateurs de pression différentielle; chacun de ces capteurs étant relié aux deux prises de pression d'un élément générateur de pression différentielle défini ci-dessus et fournissant un signal électrique représentatif de la différence de pression mesurée;

- une jauge de volume adapté pour permettre l'établissement d'un point de la caractéristique (débit, différence de pression) d'un élément générateur de pression différentielle;

- un organe de règlage du débit, tel qu'un robinet, les raccords et la robinetterie nécessaires au montage et au fonctionnement;

- un micro-ordinateur adapté pour:

. recevoir, à travers interfaces et convertisseurs analogique-numériques nécessaires, les signaux fournis par le ou les capteurs de pression différentielle et par la cellule électronique après totalisation par le compteur électronique, externe ou interne;

. prendre en mémoire:

- la valeur du "pas de volume" du type de compteur en essai;

- les deux valeurs (débit, pression différentielle), établies lors du dernier étalonnage volumètrique, d'un point de la caractéristique d'un élément d'essais, générateur de pression différentielle;

- pour chacun des éléments, générateurs de pressions différentes, de l'installation d'essais, éléments débitmètriques:

. la relation de variation, liant débit et pression différentielle;

. la relation de variation du coefficient de résistance en fonction du débit; ou,

. s'il s'agit d'un organe déprimogène, la relation, établie expérimentalement, de variation du coefficient de débit en fonction de celui-ci;

. pouvoir faire, à partir de l'horloge interne du micro-ordinateur, toutes les mesures de temps nécessaires au calcul de débit d'écoulement, le volume écoulé étant connu, et inversement;

. effectuer les instructions des programmes ou sous-programmes:

- (A): pendant chaque séquence de mesure, correspondant à un règlage du débit, et pour chaque capteur de pression,

. saisir, en mode cadencé, les valeurs de la différence de pression instantanée mesurée;

. calculer la moyenne de ces valeurs instantanées;

- (B): pour chaque séquence de mesure, effectuer simultanément:

. le calcul du volume apparent enregistré par le compteur à vérifier, résultant du produit du "pas de volume" par le nombre de ceux-ci détectés par la cellule opto-électronique;

. la détermination du temps d'écoulement du volume de liquide correspondant à ce volume apparent, en utilisant l'horloge interne du micro-ordinateur;

- (C): détermination des valeurs (débit, pression différentielle) d'un point de la caractéristique d'un élément d'essai:

. du début à la fin du remplissage de la capacité jaugée,

. détermination de $\Delta h_0$ par (A);

. détermination du volume apparent de remplissage par (B);

. à la fin du remplissage:

. calcul du débit apparent, quotient du volume apparent par le temps de remplissage, également donné par (B);

. après lecture et saisie du volume réel de remplissage, calcul du coefficient d'erreur, $1 + e_0$, par le rapport du volume apparent au volume réel, puis extraction de $e_0$;

. calcul du débit réel, $Q_0$, égal au quotient du débit apparent par le coefficient d'erreur: $1 + e_0$;

. mise en fichier des valeurs: $\Delta h_0$, $Q_0$, $e_0$;

- (D): détermination du débit d'essai, Q, et de e correspondant:

. cas 1: Un seul élément générateur de perte de charge,

- détermination de $\Delta h$, v, t, par les programmes (A) et (B);

- détermination de Q par la relation: $Q^2(\Delta h_0\lambda) = Q_o^2 (\Delta h_0\lambda_0)$ et la relation de variation du coefficient de résistance en fonction du débit;

- calcul de $(1 + e)$ par: $(1 + e)Qt = v$ et calcul de: e;

- mise en fichier des valeurs: $\Delta h$, Q, e;

. cas 2: deux éléments sont utilisés, le premier entre $Q_0$ et $Q_1$, le second entre $Q_1$ et $Q_2$,

- l'essai au débit $Q_1$ selon "cas 1" conduit à la mise en fichier des valuers: $\Delta h_1$, $Q_1$, $e_1$;

- simultanément, le programme (A) donne $\Delta h_1^!$ relative au débit $Q_1$ et au second élément;

- enfin, l'essai au débit Q et l'exécution de "cas 1" conduisent à la mise en fichier des valeurs: $\Delta h$, Q, e;

. les cas de trois éléments ou plus se ramènent au "cas 2": ce cas est ramené au "cas 2" en groupant successivement ces éléments par couples correspondant aux limites de débits:

- $Q_0$ élément 1 $Q_1$ élément 2 $Q_2$

- $Q_1$ élément 2 $Q_2$ élément 3 $Q_3$

- - - - - - - - - - - - - - - - - - - (n-3) couples

- $Q_{n-1}$ élément n $Q_n$ élément n + 1 Q

- programme E: variante du programme D, dans lequel on substitue:

. le coefficient de débit d'un organe déprimogène au coefficient de résistance,

. la relation de variation du coefficient de débit en fonction du débit à celle de variation du coefficient de résistance en fonction du débit;

- programme G: édition de la courbe d'erreur;

- programme H: traitement statistique des résultats;

- programme I: modification des relations utilisées dans les différents programmes en fonction des caractéristiques du fluide transitant par le compteur: masse volumique, viscosité cinématique.

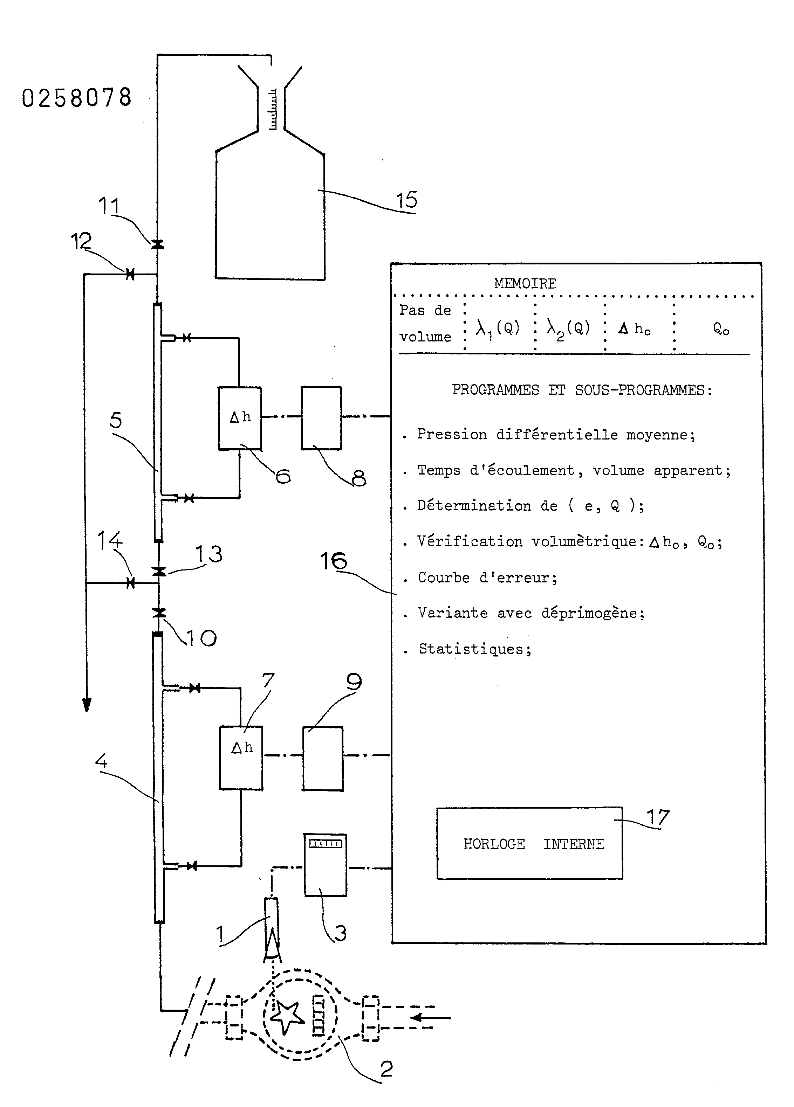

Un exemple de dispositif suivant l'invention est décrit ci-après et illustré par le dessin annexé. Cet exemple, adapté au cas de compteurs à étendue de mesure limitée, en particulier parce qu'il ne comporte que deux éléments générateurs de perte de charge, ne restreint pas, de ce fait, la portée du procédé et du dispositif objets de l'invention.

Le dispositif représenté comprend:

- une cellule opto-électronique (1), dont le support est adapté à la tête (2) du compteur à vérifier; une possibilité de réglage permet de positionner la cellule de façon que le point de convergence de son faisceau soit dans la zone balayée par les branches de l'étoile, mobile visible le plus rapide; les signaux, émis par la cellule et correspondant aux discontinuités que représentent les passages de ces branches, sont transmis à un compteur électronique (3); celui-ci totalise les "pas de volume", volumes apparents correspondant aux volumes réels écoulés entre deux signaux consécutifs;

- deux éléments de canalisation d'essai (4) et (5) qui, placés en série avec le compteur à vérifier, mais disposés entre longueurs droites suffisantes pour que les perturbations d'écoulement amont et aval ne se transmettent pas jusqu'à eux, sont séparés par un robinet de réglage (10) et un robinet d'isolement (13) entre lesquels une dérivation, équipée d'un robinet d'isolement (14), permet de diriger éventuellement l'écoulement vers l'évacuation dès la sortie du premier élément; chaque élément est équipé de deux prises de pression reliées à un capteur de pression différentielle (6) et (7) dont les signaux sont traités par un convertisseur analogique-numérique (8) et (9);

- un robinet de règlage (10) permettant l'ajustement des débits;

- trois robinets d'isolement (12), (13), (14), permettant la mise en circuit:

. des deux éléments (4) et (5) pour les débits faibles et le débit de raccordement auquel sont mesurées les pertes de charge de chacun des éléments;

. de l'élément (4) seul, pour les autres débits;

- un robinet d'isolement (11) permettant l'alimentation d'une jauge étalonnée (15) pour les mesures périodiques d'étalonnage d'un point de la caractéristique, (perte de charge, débit), de l'élément (5);

- une jauge étalonnée, utilisée périodiquement et non pour les essais de chaque compteur; cette jauge (15) a une capacité adaptée au débit de remplissage, au "pas de volume", aux divisions élémentaires de l'horloge (17) et à la condition d'obtenir des durées de manoeuvre de démarrage et arrêt,à débit variable, négligeables par rapport à la durée totale de remplissage;

- un micro-ordinateur (16), capable de:

. garder en mémoire:

- les deux valeurs (pression différentielle,débit), établies par le dernier étalonnage volumètrique;

- pour chacun des deux éléments, la relation de variation de la perte de charge en fonction du débit et du coefficient de résistance, et la relation de variation de ce coefficient en fonction du débit;

. recueillir, à travers les interfaces adaptées, les informations du compteur électronique (3) et des capteurs de pression différentielle (6) et (7);

. utiliser son horloge interne (17), sur instructions programmées, pour chronomètrer les variations du contenu du compteur électronique (3), ou pour cadencer la saisie des signaux émis par les capteurs (6) et (7);

. exécuter les différents programmes ou sous-programmes:

- moyenne des pressions différentielles saisies en "cadencé";

- temps d'écoulement et,simultanément, volume apparent écoulé;

- vérification volumètrique, ( $h_0$, $Q_0$) en un point;

- détermination de Q , e ;

- variante déprimogène

- variante: fluide différent;

- edition courbe d'erreur.

Tous les composants matériels participant à la réalisation d'un tel dispositif sont utilisés dans de multiples applications et sont disponibles sur le marché spécialisé. Leur description en détail serait donc superflue .

Les possibilités d'utilisations industrielles du procédé et du dispositif suivant l'invention sont considérables parce que les compteurs sont employés en très grand nombre dans le domaine de la distribution des produits liquides, dont ils déterminent généralement les quantités facturables, et dans des installations de production de toute nature, nécessitant des dosages réalisés à partir de volumes déterminés de liquides. Dans tous ces cas, les indications du comptage peuvent être affectées d'erreur dont la connaissance est essentielle.

En outre, certains compteurs, même à l'état neuf, pouvant donner des indications erronées si leur environnement est inadapté, la présente invention doit permettre la définition et en conséquence la réalisation des moyens indispensables pour obtenir un comptage satisfaisant.

## Revendications

1) Procédé pour la vérification d'un compteur de liquide, dans son site de fonctionnement habituel, par l'établissement de sa courbe d'erreur, traduisant les variations de l'erreur en fonction du débit, caractérisé en ce que, associant pour l'établissement des valeurs (débit Q, erreur e) de chacun des points de la courbe d'erreur contrôlés, la mesure du débit par un débitmètre d'essai étalonné en un point de sa caractéristique, la mesure du volume apparent par le compteur à vérifier et la mesure du temps d'écoulement correspondant, il se décompose en:

- la mise en place, en série avec le compteur (2) à vérifier, d'un élément (5), élément débitmétrique, dans lequel l'écoulement crée une différence de pression fonction du débit, et dont on a déterminé préalablement la différence de pression, $\Delta h_0$, correspondant à un débit précis, $Q_0$;

- pour chacun des débits, Q, d'une série de débits réparties dans l'étendue de mesure du compteur à vérifier:

. la mesure de la pression différentielle, $\Delta h$, de l'élément débitmètrique (5),

. les mesures simultanées du volume apparent, v,indiqué par le compteur, et du temps d'écoulement t, du volume réel correspondant à ce volume apparent,

. la détermination de Q, à partir des données, $\Delta h_0$, $Q_0$, de la mesure $\Delta h$, et des relations de variation:

- du coefficient de résistance en fonction du débit,

- de la pression différentielle en fonction du débit et du coefficient de résistance,

ou, des relations de variation:

- du coefficient de débit en fonction de celui-ci,

- de la pression différentielle en fonction du débit et du coefficient de débit,

suivant que l'élément débitmètrique (5) est un tronçon de canalisation dont on mesure la perte de charge, ou bien un organe déprimogène dont on mesure la pression différentielle,

. la détermination du coefficient d'erreur, 1+e, par le rapport du volume apparent au volume réel, lui-même étant donné par le produit: Q t ,

puis celle de l'erreur, e, à partir du coefficient d'erreur;

2) Procédé suivant la revendication 1 caractérisé en ce que, pour améliorer la précision des résultats et pour maintenir le même type d'écoulement pendant toutes les mesures effectuées avec un même élément débitmétrique, on utilise, en plus de l'élément primaire (5), un autre élément (4) ou plusieurs autres éléments débitmétriques, tous ces éléments étant placés dans le circuit d'essai par couple et on série de telle façon que la fin de la plage d'utilisation d'un élément corresponde au début de la plage d'utilisation d'un autre et que, si les dites plages d'utilisation de deux éléments consécutifs sont les débits $Q_n$ et $Q_{n+1}$ et $Q_{n+2}$ pour l'autre, correspondant aux mesures de pression différentielle $\Delta h_n$ et $\Delta h_{n+1}$ sur l'un, $\Delta h'_{n+1}$ et $\Delta h'_{n+2}$ sur l'autre, alors la détermination de la valeur Q du débit, située dans la plage d'utilisation du second élément, soit possible par application de la relation:

$$\frac{Q}{Q_n} = \frac{Q}{Q_{n+1}} \times \frac{Q'_{n+1}}{Q'_n}$$

exprimée en fonction des pressions différentielles mesurées par les capteurs (6) et (7) associés respectivement aux éléments débitmétriques (5) et (4) correspondants.

3) Dispositif de mise en oeuvre d'un procédé selon l'une des revendications précédentes, caractérisé en ce qu'il comprend:

- une cellule opto-électonique, capteur du mouvement du mobile visible le plus rapide du compteur à vérifier, fournissant un signal électrique synchrone du passage des discontinuités de ce mobile dans le faisceau optique en sorte qu'il s'écoule, entre deux signaux consécutifs, un volume apparent, le "pas de volume", caractéristique du compteur imposée par sa construction;
- un compteur électronique (3) totalisant le nombre de signaux fournis par la cellule opto-électronique (1);
- au moins un élément débitmétrique (5), siège de pressions différentes dont la différence est fonction du débit d'écoulement, et qui peut être:
. soit un élément de canalisation équipé de deux prises de pression pour permettre la mesure de la perte de charge,
. soit un organe déprimogène équipé de ses deux prises de pression;
- un ou deux capteurs, (6) et (7), de pression différentielle, suivant que l'on utilise un ou plusieurs éléments débitmétriques; chaque capteur étant relié aux deux prises de prssion d'un élé ment débitmètrique et fournissant un signal électrique représentatif de la différence de pression mesurée;
- un organe de règlage (10) du débit, la robinetterie (11), (12), (13), (14), et les raccords nécessaires au montage et au fonctionnement de l'installation d'essais;
- un micro-ordinateur (16) adapté pour:
. recevoir, à travers convertisseurs (8), (9), et interfaces nécessaires, les signaux des capteurs de pression différentielle (6), (7), et de la cellule opto-électronique (1) après totalisation par le compteur électronique (3), celui-ci pouvant être externe ou interne au micro-ordinateur;
. garder en mémoire:
- la valeur du "pas de volume" du compteur à vérifier;
- les deux valeurs (débit, pression différentielle), établies lors du dernier étalonnage volumètrique, d'un point de la caractéristique d'un élément débitmètrique utilisé;
- pour chaque élément débitmètrique dont on mesure la perte de charge:
. la relation, adaptée au type d'écoulement pendant les essais, entre le débit et le coefficient de résistance du dit élément,
. la relation liant le débit, le coefficient de résistance et la perte de charge;
- pour chaque élément débitmètrique, organe déprimogène:
. la relation, adaptée au type d'écoulement pendant les essais, entre le débit et le coefficient de débit du dit organe,
. la relation liant le débit, le coefficient de débit et la pression différentielle;
. effectuer, à partir de l'horloge interne (17) du micro-ordinateur, les mesures de temps nécessaires au calcul du débit, quotient du volume par le temps, ou au calcul du volume, produit du débit par le temps, ou encore à la détermination de la moyenne des pressions différentielles mesurées pour chaque règlage de débit;
. exécuter les instructions des programmes ou sous-programmes:
- pression différentielle moyenne,
- temps et volume apparent simultanés,
- détermination de: (e, Q),
- édition de la courbe d'erreur;

4) Dispositif selon la revendication 3, caractérisé en ce qu'il comprend une jauge de volume (15), étalonnée, permettant de déterminer les valeurs (débit, pression différentielle) d'un point de la caractéristique d'un élément débitmètrique (5); la dite jauge ayant une capacité adaptée au débit de remplissage, au "pas de volume", aux divisions élémentaires de l'horloge (17) et à la condition d'obtenir des durées de manoeuvre de démarrage et arrêt négligeables par rapport à la durée totale de remplissage.

0258078

MEMOIRE

| Pas de volume | $\lambda_1(Q)$ | $\lambda_2(Q)$ | $\Delta h_o$ | $Q_o$ |
|---|---|---|---|---|

PROGRAMMES ET SOUS-PROGRAMMES:

. Pression différentielle moyenne;

. Temps d'écoulement, volume apparent;

. Détermination de ( e, Q );

. Vérification volumètrique: $\Delta h_o$, $Q_o$;

. Courbe d'erreur;

. Variante avec déprimogène;

. Statistiques;

HORLOGE INTERNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 573 057 (POLLUX GmbH)<br>* Page 4, dernier alinéa - page 5, alinéa 2; page 6, alinéa 4 - page 7, dernier alinéa; page 9, alinéas 4-5 * | 1,3 | G 01 F 25/00 |
| | --- | | |
| A | PATENT ABSTRACTS OF JAPAN, vol. 6, no. 212 (P-151)[1090], 26 octobre 1982; & JP-A-57 118 115 (MATSUSHITA DENKI SANGYO K.K.)<br>* En entier * | 1 | |
| | --- | | |
| A | US-A-4 052 897 (DEBAUN)<br>* Abrégé; figures * | 1,2 | |
| | ----- | | |

DOMAINES TECHNIQUES
RECHERCHES (Int. Cl.4)

G 01 F 25/00
G 01 F 1/34

Le présent rapport de recherche a été établi pour toutes les revendications

| Lieu de la recherche | Date d'achèvement de la recherche | Examinateur |
|---|---|---|
| LA HAYE | 06-10-1987 | NUIJTEN E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82